# EUROPEAN PATENT SPECIFICATION

(11) **EP 2 481 558 B1**
(45) Date of publication and mention of the grant of the patent: **22.06.2016**
(21) Application number: 11400010.2
(22) Date of filing: 31.01.2011
(51) Int. Cl.: B29C 70/54, B29C 70/44, B29C 70/08, B29L 31/08, B29K 105/08

(54) **METHOD FOR MANUFACTURING OF PREIMPREGNATED PREFORM**
VERFAHREN ZUR HERSTELLUNG EINER VORIMPRÄGNIERTEN VORFORM
PROCÉDÉ POUR FABRIQUER UNE PRÉFORME PRÉ-IMPRÉGNÉE

(43) Date of publication of application: 01.08.2012
(73) Proprietor: AIRBUS HELICOPTERS DEUTSCHLAND GmbH, 86609 Donauwörth (DE)
(72) Inventor: Kaiser, Michael, 81547 München (DE); Weimer, Christian, 81543 München (DE); Parlevliet, Patricia, 81667 München (DE); Dorn, Florian, 83623 Dietramszell (DE)
(74) Representative: Pouillot, Laurent Pierre Paul

(56) References cited:
- EP-A1- 1 038 656
- EP-A2- 1 059 675
- EP-A2- 1 205 507
- DE-A1-102005 023 320
- DE-A1-102008 038 294
- US-A- 4 165 765
- US-A- 5 464 337
- US-A- 6 051 089
- US-A1- 2004 222 562
- US-A1- 2005 253 309
- US-A1- 2006 233 907
- US-B1- 7 014 805
- SCHÖLDGEN R ET AL: "Mehr Verarbeitungsfreiheit für Composites", KUNSTSTOFFE, CARL HANSER VERLAG, MUNCHEN, DE, vol. 100, no. 1, 1 January 2010 (2010-01-01), pages 26-28, XP001552124, ISSN: 0023-5563
- CAMPBELL FLAKE C ED - CAMPBELL FLAKE C: "Manufacturing processes for advanced composites, Chapter 2 (Fibers and Reinforcements: The String That Provides the Strength)", 1 January 2004 (2004-01-01), MANUFACTURING PROCESSES FOR ADVANCED COMPOSITES, ELSEVIER ADVANCED TECHNOLOGY, OXFORD, GB, PAGE(S) 39 - 64, XP002635050, ISBN: 978-1-85617-415-2 * page 56 - page 61 *

## Description

The present invention relates to a method for manufacturing of a preimpregnated preform according to the preamble portion of claim 1.

A preform is defined as several layers of dry fabrics or dry non-crimp-fabrics such as glass, carbon, aramid, basalt or natural fibres - in general dry semi-finished products, which are stacked one above the other. It can be flat or flat with different heights depending on the amount of dry fabrics on different areas or also have a 3 dimensional shape, like an omega stiffener, T-beam, etc. This 3-dimensional preform is often built up by several smaller 2-d preforms, which are draped into a 3 dimensional shape. To keep this 3-dimensional shape, the dry layers have to be fixed together to allow handling and/or transport of the preform from one place to another. This can be done by using binder, which melts at elevated temperatures and fixes the layers in this 3-d shape or the layers can be stitched together with a sewing machine and a yarn.

A prepreg - abbreviation for pre-impregnated - consists in general of one layer of fabric, such as unidirectional fabric, bidirectional fabric etc. with glass, carbon, aramid, basalt or natural fibres already impregnated with resin. The prepreg has a tack and can be draped into a tool layer by layer to get a 3-D shape. The prepreg sticks on the tool or the last layer of prepreg. One layer of prepreg can have different heights e.g. between from 0,1-0,5 mm, often 0,25 mm. That means that for thick complex parts a lot of layers have to be laid-up in general by hand in contrast to a preform, where several layers can be draped in one step, since dry fabrics can slide and do not stick together. For less complex parts prepregs are already applied automatically with high equipment costs.

The document EP1059675 describes a method of encapsulating a photovoltaic module. A diaphragm that pressurizes and heats encapsulating materials is pre-heated to a predetermined temperature before laminating, a lamination unit comprising the photovoltaic module and the encapsulating materials. One surface of the lamination unit is heated by a heater provided on a table and the other surface is heated by the diaphragm, to prevent appearance of a temperature difference between the surfaces.

The document US20050253309 describes a double vacuum bag molding.

The document US 2006049552 discloses a method of joining two components of a composite structure by using a fibrous preform at the joint. The preform has two lateral portions and a longitudinally extending flow path. The preform is sandwiched between the two components and enclosed within a vacuum bag. Resin is introduced at an inlet of the flowpath while a vacuum pump creates a suction at an outlet end and along the lateral side edges. The flow path has greater permeability than the remaining portions of the preform, causing the resin to flow to the outlet end. When the resin reaches the outlet end, the suction at the outlet end is reduced, but the suction at the lateral edges remains without reduction to cause the resin to flow laterally into the preform.

Known preform-injection or infusion processes use dry semi-finished products or dry fabrics, which are infused or injected afterwards with liquid resin. Complex preforms can be stabilized by using binder, which have to be activated by a heat source after several layers each time again, which is again a time consuming process. Furthermore if binder material is used, it is often not beneficial for the composite mechanical properties. Preforms can be also stabilized by means of stitching, but also a further processing step is necessary.

With known injection or infusion technologies the resin has to be distributed from one or several inlets either through the preform itself or by a resin distribution media in lateral direction. Therefore the resin has to flow a long way through the fibres or through the resin distribution media which makes it necessary to have low viscosity resins. Resins with modifications such as fillers (for toughening, Fire-smoke-toxicity reduction, etc.) are often too viscous or there is the chance of filtering the modifiers out leading to an uneven distribution over the part.

With Resin Film Infusion technologies several layers of resin film have to be applied on the preform according to the thickness of the part. The preform has to be stabilized either by using the film in between the layers leading to a time consuming lay-up or by a bindered or stitched preform, leading to the disadvantages stated above. Since the resin film is often quite viscous autoclave curing systems have often to be used.

According to the document US2008308210 a protocol for determining process parameters for debulking composite laminates is established using a standardized double vacuum debulk (DVD) process. This allows for the development of a rapid fabrication process for thick laminates of toughened carbon/epoxy composite materials. For rework, a single piece multilayer patch is made available for bonding with an adhesive layer to a prepared structural area.

The document EP1235672 discloses a double bag vacuum infusion process and a method for producing complex composite assemblies without an autoclave.

The document WO2005000566 discloses an infusion and/or injection process by means of a mold assembly and a method of using the mold for the manufacture of composite parts which, more particularly, are generated from a strengthener in a generally solid phase and a matrix in a generally liquid phase. The mold assembly comprises a base mold including a strengthener chamber for receiving the strengthener and a matrix injection inlet for injecting the matrix in said strengthener chamber. The mold assembly further comprises a cover mold including a compression chamber and a fluid control aperture for injecting a fluid, i. e. a gas, in said compression chamber; said cover mold being so configured as to be sealingly mounted on said base mold whereby said strengthener chamber and said compression chamber are adjacent. A deformable member is provided in a gap defined by said strengthener chamber and said compression chamber as to pressurize the matrix toward the strengthener upon compression by the fluid. The document WO2005000566 discloses as well a method for generating a composite part from a strengthener and a matrix by sealingly positioning a deformable member in between a first chamber of a first mold portion and a second chamber of a second mold portion; said first chamber receiving the strengthener; impregnating the strengthener with the matrix injected in said first chamber; compacting the matrix toward the strengthener by pressurizing a controlling fluid injected in said second chamber on said deformable member while impregnating the strengthener in said first chamber is performed at a vacuum pressure which is lower than atmospheric pressure. Said device and method are directed to the production of fully cured composite parts and not to the production of preimpregnated preforms. The injection of matrix from one end of said first chamber into the strengthener implies the typical shortcomings of injection such as uneven distribution of said matrix throughout the strengthener, particularly if said strengthener is made of a thick and/or complex fibre package. A further disadvantage of the above mentioned state of the art is that additionally the preform has to be stabilized with binder or other means before injection, otherwise fibre misalignment will occur due to the high pressure which is applied to compact the fibre reinforcement.

It is an object of the invention to provide a method for manufacturing of a preimpregnated preform allowing improved impregnation for preforms of thick fibre packages and/or complex preforms.

According to the invention said object is achieved with a method of manufacturing of a preform with the features as of claim 1.

According to the invention for manufacturing a preimpregnated preform of a plurality of dry semi-finished products or dry fabrics with resin, a device comprises a first rigid vacuum chamber, and a flexible vacuum foil/membrane tightening said first vacuum chamber, said preform being encompassed by said first vacuum chamber and said flexible foil/membrane. A second vacuum chamber is provided and said foil/flexible membrane is separating said first vacuum chamber from said second vacuum chamber. The inventive device comprises a liquid tight first vacuum chamber as the resin is already provided on and/or in the preform of a plurality of dry semi-finished products or dry fabrics before said preform is enclosed in said first vacuum chamber said provision of resin on and/or in said preform allowing to impregnate automatically preforms without the need of any injection of liquid resin into said first vacuum chamber, thus allowing a less complicated first vacuum chamber in the inventive device compared to the state of the art as described in WO2005000566 with an infiltration process with just a vacuum foil and a flexible vacuum chamber. The first vacuum chamber of the inventive device allows to impregnate automatically dry multi-layer semi-finished products or topology optimised and/or complex preforms with viscous resins. In particular the invention allows impregnation of substrates with the infusion procedures lowering the thickness limitations. The preform impregnated with the inventive device is not fully cured and therefore it can be cured separately or assembled together with other impregnated preforms to build up a complex component reducing binder, stitching, lay-up and joining steps.

According to an embodiment at least one wall of said first vacuum chamber can be equipped with a heating device allowing to increase the temperature and therefore to decrease the viscosity of the resin.

According to a further embodiment at least one resin application means is provided to apply resin to the dry semi-finished products or dry fabrics in said first vacuum chamber. Said resin application means is preferably controlled by a portal or a robot system or any other positioning system to locally apply the resin onto the semi-finished product with the necessary quantity depending on the local thickness of the preform. The resin can also be applied manually.

According to a further embodiment the resin has a viscosity higher than normal infusion resin i.e. higher than 300mPas.

According to a further embodiment the preform is shaped, e. g. like an omega stringer.

According to a further embodiment the vacuum chambers are separated by at least one intermediate wall to provide more flexibility for the application of controlled pressure to the preforms with the applied resin.

According to a further embodiment each of the second vacuum chambers are provided with at least one controllable vacuum port for individual control of the pressure in each of the vacuum chambers.

According to a further embodiment a thermoplastic film is integrated into or onto the preform, allowing thermoplastic-thermoplastic welding of preforms to complex components. Said thermoplastic film can also increase the quality of a surface layer of the preform such as scratch resistance, smoothness, etc.

According to an embodiment a method of manufacturing a preimpregnated preform with said above described device, comprises the following steps:
- Arranging dry semi-finished products or dry fabrics in a first vacuum chamber,
- Applying resin locally on, in between or below the preform of dry semi-finished products or dry fabrics with quantities depending on the local thickness of the preform,
- Isolating/tightening the first vacuum chamber,
- Removing at first air from an adjacent second vacuum chamber interacting with the first vacuum chamber via a vacuum foil/flexible membrane,
- Removing subsequently air from the first vacuum chamber to the same pressure as in the second vacuum chamber or slightly above in order to remove any air from the preform of dry semi-finished products or dry fabrics inside the first vacuum chamber,
- Eventually heating up the first vacuum chamber and
- Increasing subsequently the pressure in the second vacuum chamber to press the resin into the preform in the first vacuum chamber.

With the invention the resin is preferably placed onto the preform automatically according to the desired fibre volume content. So no resin has to be delivered from the outside of the chamber as in vacuum infusion or RTM processes, which saves time, labour, and results in higher process stability, since the right amount of resin is already applied on the preform. The inventive method allows to impregnate automatically preforms with more viscous resins and additional components in the resin like fillers, flame retardant, modification components for the improvement of the toughness because it is not limited to low viscosity resins. The inventive method allows to automatically apply and evenly distribute the resin in thickness direction of the dry semi-finished products or dry fabrics without the massive filtration effects of the standard vacuum infusion processes since the infiltration distance is very short. According to the invention the resin is placed directly on/in between or below the preform and is not - like in the state of the art - infiltrated in a standard infiltration/injection process supplying the resin from a reservoir and injecting or sucking it into the preform or resin distribution media with a low viscosity resin.

The pressure in the second vacuum chamber is increased after reaching the infiltration temperature depending on the resin system, so that the flexible diaphragm on the resin and/or semi-finished exerts a pressure on the resin on top of the preform and thus the preform is infiltrated by the resin in thickness direction.

According to a embodiment of the invention the differential pressure between the second vacuum chamber and the first vacuum chamber can be adjusted depending on the precompaction of the preform, a b-staging/degree of cure, i.e. a stage, in which the resin is partially cured with some of its molecules cross-linked, and the viscosity of the resin for balanced parameters after infiltration, to avoid relaxation of the preform after the infiltration, as such relaxation may have the consequence that air may be sucked into the preform and said air may remain partially included in the end product with the further consequence of a low laminate quality.

According to a further embodiment of the invention the differential pressure is low allowing the complete evacuation of the preform and the following infiltration as no or very minimum amounts of air are entrapped in the layers during the infiltration e.g. less than 2% of voids. A further advantage results from the lower differential pressure in so far as the preform is less compacted and thus the permeability is increased, which facilitates the infiltration also for more viscous resins. Moreover according to the invention the relaxation forces by ambient pressure are lower due to the reduced compaction and the preform remains in its infiltrated and slightly compacted condition. Compared to a state of the art with stronger compaction the relaxation forces make the preform relax again and thus air is getting sucked into the already infiltrated preform. These disadvantages of the state of the art are avoided by adjustment of parameters by means of the vacuum chambers and amount of resin applied of the invention in order to achieve a good preimpregnated preform quality.

According to a further embodiment of the invention multi-layer impregnated preforms are assembled together with other impregnated preforms to build up a complex part reducing binder, stitching, lay-up and joining steps.

According to a further embodiment of the invention the still tacky but already impregnated preforms can be draped, dependent on the viscosity of the resin, which makes the application of binder no longer necessary. Due to the infiltration in thickness direction more viscous resins can be applied with this invention than with standard vacuum infiltration procedure.

The invention allows production of rotor blades, particularly rotor blades of helicopters, but as well blades for wind energy plants, with two intermediate preforms or several preforms being impregnated separately according to the invention. After the impregnation of the preforms, foam, lead, etc. can be added to the tacky surface of the preforms and integrated in the component formed of the preforms. A curing step in a press or other out of autoclave methods follows to harden the resin of the component completely.

The invention allows the infiltration of preforms for structural components of aircrafts or components in the automotive industry, like frames, longitudinal beams and/or reinforced outer shells. For this purpose entire preforms or subpreforms are impregnated as individual components, joined in the impregnated stage or be joined to a component when curing, e.g. for outer shells or stringers.

In the following description the name preformprepreg is used as an expression for the product, which consists of a multi-layer preform which is preimpregnated with resin.

The main advantages for manufacturing composite parts or components e.g. rotor blades with the new process are:
- The preformprepreg process combines the highly automatable preform process with the advantages of labour intensive prepreg hand lay-up, in detail:
- The preformprepreg has a tack so that auxiliary materials such as foam core, lead, balancing chamber, tuning mass etc. can be easily placed onto it and no binder activation processes are necessary to make the parts sticking together.
- Also several thick multi-layer tacky preformprepregs can be easily placed on top of each other without any fixation to create in a few working steps a thick or more complex part, in contrast to prepreg, where the prepreg has to be applied layer by layer.
- The preformprepreg is also still flexible and can be draped to a certain degree and sticks to the mould
- It is also possible to create resin rich areas during the preformprepreg process. The excessive resin can then be used to impregnate additional dry preforms which are placed onto this area just before the curing process, such as trimming chamber or local reinforcements.
- Additionally the excessive resin penetrates into the first cells of the foam leading to a good interface foam-fibre layer adhesion
- It is possible to create a lower fibre volume content area e.g. at the end of the aerodynamic chord where a lower fibre volume is envisaged due to the high elongation and vibration in this area to prevent micro-cracks
- In contrast to vacuum infusion processes it is guaranteed that the area under the erosion protection is already impregnated with resin and non destructive testing inspections are reduced for this area what is not the case with infusion processes as RTM or vacuum infusion. Therefore the erosion protection is not integrated during infusion processes and assembled afterwards with the result of auxiliary production costs.
- By implementing a thermoplastic film, the preformprepreg component could be easily removed. The thermoplastic film can be modified as mentioned before, to improve surface quality, scratch resistance, toughness or acting as lightening strike and it can also be heated to get a de-icing effect to prevent water to freeze on the blade during bad weather conditions.

According to a further preferred embodiment the multi-layer preimpregnated preform comprises multiple layers of reinforcement which are impregnated with resin, namely said multiple-layer impregnated preform comprises different layers, particularly NCFs and UDs that are normally difficult to impregnate. According to an important aspect of the invention the preform/layers of fibres are infiltrated by the resin already placed on top of/ between or below the dry preform, semi-finished product or fabric in thickness direction with a relatively short infiltration distance, because impregnation takes place in thickness direction of the plurality of dry semi-finished products or dry fabrics, to completely impregnate the dry preform, semi-finished product or fabric thus preventing wash-out or filtering of the resin during the impregnation step. The invention allows the demoulded preform still to be draped, depending on the degree of precure/b-staging/viscosity of the resin. Thereby work procedures can be avoided. In addition more viscous, usually filled resin systems can be applied according to the invention, since the resin is infiltrated in thickness direction of the preform. Components, like fillers, flame retardant or toughening particles of the resin are not extensively filtered by the preform with the infiltration according to the invention taking place in thickness direction contrary to classical vacuum infusion procedures. A further advantage of the invention is related to the quality assurance/inspection of any intermediate product of the invention allowing recognition of non impregnated zones (e.g. glass fibres) in the impregnated preform compared to infusion processes where non destructive testing has to be used to detect dry areas, void formations or entrapped air after cure since during infiltration no inspection can be conducted.

According to a further preferred embodiment different contents of resin are provided in the dry semi-finished products or dry fabrics.

According to a further preferred embodiment a thermoplastic foil is
provided on and/or within the dry semi-finished products or dry fabrics.

The multi-layer preimpregnated preform with multiple layers of reinforcement which are impregnated with resin has the following advantages:
- due to good impregnation of the preimpregnated preform and low void content, curing can take place out-of-autoclave, meaning less pressure is required to cure the part,
- the preimpregnated preform (PP) can be draped because the resin is not fully cured,
- no binder or stitching procedures needed for assembly,
- the preimpregnated preform can be joined without any additional adhesive,
- the tackiness of the preimpregnated preform can be influenced by the degree of cure of the resin by regulating the amount of heat and time which is applied during the impregnation process,
- the preimpregnated preform can have different fibre volume contents by regulating the amount of locally applied resin and compaction of the dry preform to influence the local mechanical properties of the part,
- the problems of dry areas in liquid composite molding (LCM) processes are prevented, because the resin is evenly distributed over the preform with the preformprepreg process. Therefore process stability is enhanced by using the preformprepreg process since the permeability is high during impregnation in contrast to LCM processes where over-compaction of the preform reduces the permeability and leads to dry spots,
- the preformprepreg can be supplied locally with additional resin which then impregnates dry preforms being added before curing the final part,
- reduces the assembly costs and facilitates the impregnation of complex parts, and
- allows resin to incorporate additives for fire smoke toxicity, toughening, etc., since the impregnation takes place in thickness direction.

The invention and its advantages appear in greater detail from the following description of an embodiment given by way of nonlimiting illustration and with reference to the accompanying figures, in which:
- Figure 1 shows schematically a device that is used in the method according to the invention for manufacturing of a preimpregnated preform;
- Figure 2 shows steps of a method in accordance with the invention;
- Figures 3 to 7 show schematically further embodiments of manufacturing of a multi-layer preimpregnated preform according to the method as per the invention.

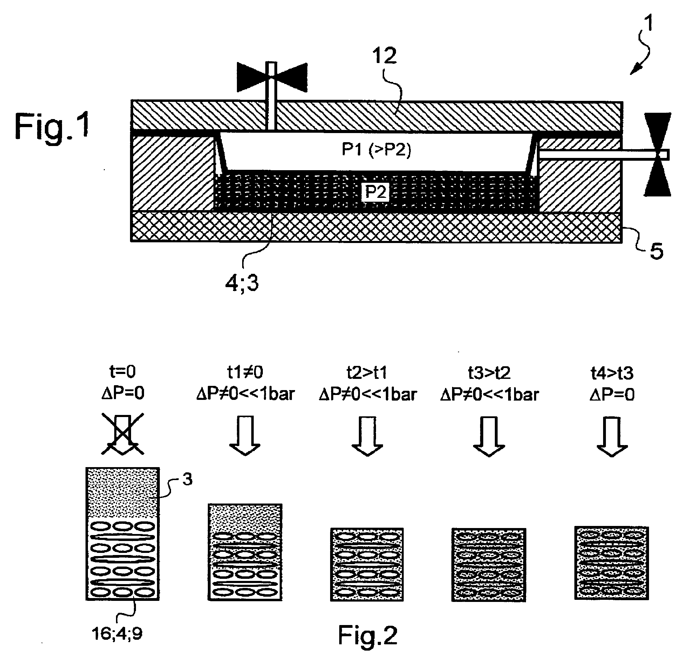

According to Fig. 1 a device 1 for manufacturing a preimpregnated preform 4 is provided with resin application means to apply viscous thermoset resin 3 on the preform 4. The resin application means 2 is controlled by hand, a portal or a robot system or any other positioning system (not shown) to locally apply the resin 3 onto the preform 4 with a quantity depending on the local thickness of the preform 4.

According to the invention, the preform 4 is placed on a stiff bottom wall or bottom plate 5 of the device 1. The bottom wall 5 can be heated with high heating and/or cooling rates. Stiff lateral walls 6, 7 together with the bottom wall 5 and a flexible membrane/vacuum foil 8 define a first vacuum chamber 9. A first vacuum port 10 is provided with a valve 11 to control air/gas pressure in the first vacuum chamber 9.

The preform 4 consists of multi-layers of semi-finished product or dry fabric with resin 3 applied on the preform with a viscosity that allows impregnation of single fibres in tows depending on pressure, temperature and time. The preform 4 comprises multiple layers 16 of reinforcement from all types of fibres, e. g. carbon, glass, aramid or natural fibres and/or modified non woven reinforcement for toughening. The preform 4 can be applied automatically and can be draped depending on the viscosity of the resin 3 being modified with incorporation of additives, such as thermoplastic, thermoset and/or elastomeric
polymer semi-finished products, such as powders, paste or liquids, flakes, like fire retardant particles, toughening modifiers, modifiers to the electrical conductivity, thermoplastics and elastomers, which are not rinsed out on the short way along the infiltration in thickness direction of the preform 4. The short flow paths for the resin 3 and the increased permeability of the preform 4 allow additives to be incorporated in the matrix, even though such additives increase the viscosity of the resin 3.

A thermoplastic plastic film (not shown) can be integrated into, underneath or above the preform 4, allowing thermoplastic-thermoplastic welding of preforms 4 to complex components. The thermoplastic film can also increase the quality such as scratch resistance, smoothness, etc. of a surface layer of the preform 4.

On top of the first vacuum chamber 9 a vacuum tight support frame holds the vacuum foil 8 to define with an upper rigid plate 12 a second vacuum chamber 13 of the device 1. The second vacuum chamber 13 is provided with a second vacuum port 14. A valve 15, controlling the second vacuum port 14, allows to define the pressure in the second vacuum chamber 13 separately from the pressure in the first vacuum chamber 9.

According to Fig. 2 resin 3 is applied to layers 16 of the dry preform 4 in the first vacuum chamber 9 of device 1 at a start and air is removed from the second vacuum chamber 13 between the upper rigid plate 12 and the flexible vacuum foil 8 to a pressure p2 as low as possible in the second vacuum chamber, e. g. a pressure p2 = 10mbar absolute. Subsequently the first vacuum chamber 9, in which the preform 4 and the resin 3 are placed, is brought to an air pressure p1 being the same as p2 or slightly higher than p2, e.g. p1 = 10-20mbar. With the same or slightly lower pressure p2 in the second vacuum chamber 13 there is no differential pressure Δp between the second vacuum chamber 13 and the first vacuum chamber 9 and thus no forces result, either to the resin 3 or to the preform 4 and thus also no resin 3 is pressed into the preform 4 to impregnate the layers 16 while due to the low pressure p1 in the first vacuum chamber 9 all air is removed from the preform 4 before any resin 3 is pressed into the preform 4 (see figure 1).

In a second step the first vacuum chamber 9 can favourably be heated up with the bottom plate 5 at a high heat-up rate to decrease the viscosity of the resin 3, if the resin is too viscous for impregnation at room temperature. The fast heat-up rates result in a lower viscosity in the way that the networking of the resin 3 and thereby the increase of its viscosity takes place more slowly than the reduction of the viscosity by the heat supply. After an interval t1 and at a slightly raised differential pressure Δp with Δp < 1 bar due to an increase of the pressure p2 in the second vacuum chamber 13 of the device 1, the vacuum foil 8 exerts pressure on the resin 3 with the consequence that resin 3 impregnates the layers 16.

In a third step after an interval t2> t1 and at the slightly raised differential pressure Δp with Δp << 1 bar the resin 3 has macro-impregnated all of the layers 16.

In a fourth step after an interval t3> t2 and at the slightly raised differential pressure Δp with Δp << 1 bar the resin 3 has micro-impregnated all of the layers 16.

In the end after an interval t4> t3 and at no differential pressure Δp, i. e. with Δp = 0 bar the viscous forces of resin 3 are greater/equal than any forces to deconsolidate preform 4.

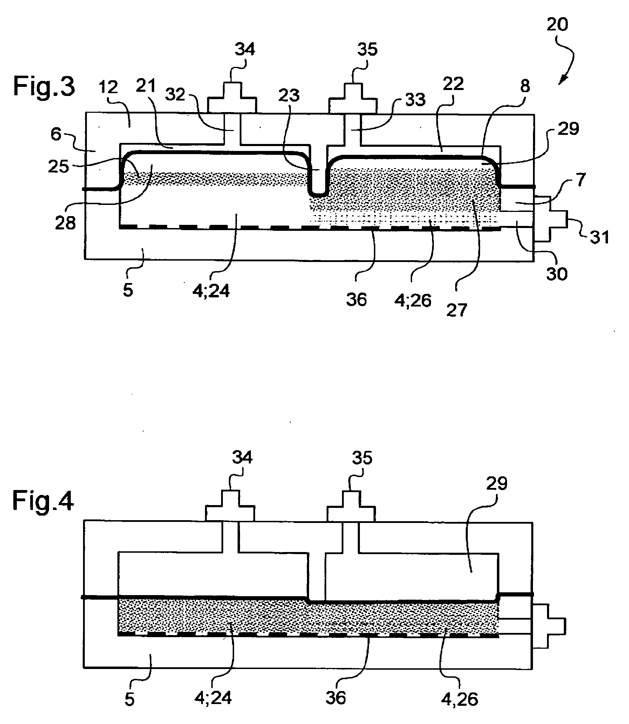

According to Fig. 3 corresponding features are numbered with the references of Fig.1. A mould device 20 is provided with two second vacuum chambers 21, 22 separated by an intermediate wall 23. A first left hand vacuum chamber 28 comprises a preform 4 of unidirectional fiber layers 24 of multi-layers of semi-finished product or dry fabric with a first resin layer 25 on said preform 4 while a first right hand vacuum chamber 29 comprises a preform 4 of an isotropic lay up 26 of multi-layers of semi-finished product or dry fabric with a second resin layer 27 on said preform 4, the second resin layer 27 being thicker than the first resin layer 25. The intermediate wall 23 reaches down into the isotropic lay up 26 and separates the second resin layer 27 from the first resin layer 25 while the unidirectional fiber layers 24 and the isotropic lay up 26 of preforms 4 are in contact with each other.

The preforms 4 can be placed on a thermoplastic film 36 on the stiff bottom plate 5 of the device 1. The bottom plate 5 can be heated. The left hand lateral wall 6 together with the bottom wall 5, the flexible membrane/vacuum foil 8 and the intermediate wall 23 define the first left hand vacuum chamber 28. The right hand lateral wall 7 together with the bottom wall 5, the flexible membrane/vacuum foil 8 and the intermediate wall 23 define the first right hand vacuum chamber 29.

A first vacuum port 30 is provided with a valve 31 to control pressure in the first left hand vacuum chamber 28 and the first right hand vacuum chamber 29.

The vacuum foil 8 is fixed and tightened laterally into each of the left hand lateral wall 6 and the right hand lateral wall 7 to define with the upper rigid plate 12 and the intermediate wall 23 the second left hand vacuum chamber 21 and the second right hand vacuum chamber 22 of the device 20. Each of the second left hand vacuum chamber 21 and the second right hand vacuum chamber 22 are provided with respective second vacuum ports 32, 33 controlled by respective valves 34, 35 to define individually the
pressure in the second left hand vacuum chamber 21 or the second right hand vacuum chamber 31 separately from the pressure in the first two vacuum chambers 28, 29.

Method of manufacturing a multi layer preimpregnated preform 4 in two vacuum chambers 28, 29

According to Fig. 3 and 4 the dry fibre preform 4 consists of a unidirectional and an isotropic area, placed onto the heatable stiff bottom plate 5. An amount of resin 25, 27 is placed onto the preform 4 automatically according to the desired fibre volume content. The Membrane is fixed vacuum tight on the upper chamber 6 and sealed also at the wall 23. The upper rigid plate 12 with the intermediate wall 23 and the membrane 8 is mounted on the mould 20 to form the second left hand vacuum chamber 21 and the second right hand vacuum chamber 22 of the mould 20. The second left hand vacuum chamber 21 and the second right hand vacuum chamber 22 of the mould 20 are evacuated so that the vacuum foil 8 drapes into the second left hand vacuum chamber 21 and the second right hand vacuum chamber 22 and does not get in contact with the resin 25, 27 in the first left hand vacuum chamber 28 and the first right hand vacuum chamber 29. After that the first left hand vacuum chamber 28 and the first right hand vacuum chamber 29 of the lower mould are evacuated, leading to a balanced pressure between on the one side the upper second left hand vacuum chamber 21 and the second right hand vacuum chamber 22 and on the other side the lower first left hand vacuum chamber 28 and the first right hand vacuum chamber 29 and the vacuum foil 8 gets into contact with the resin 25, 27.

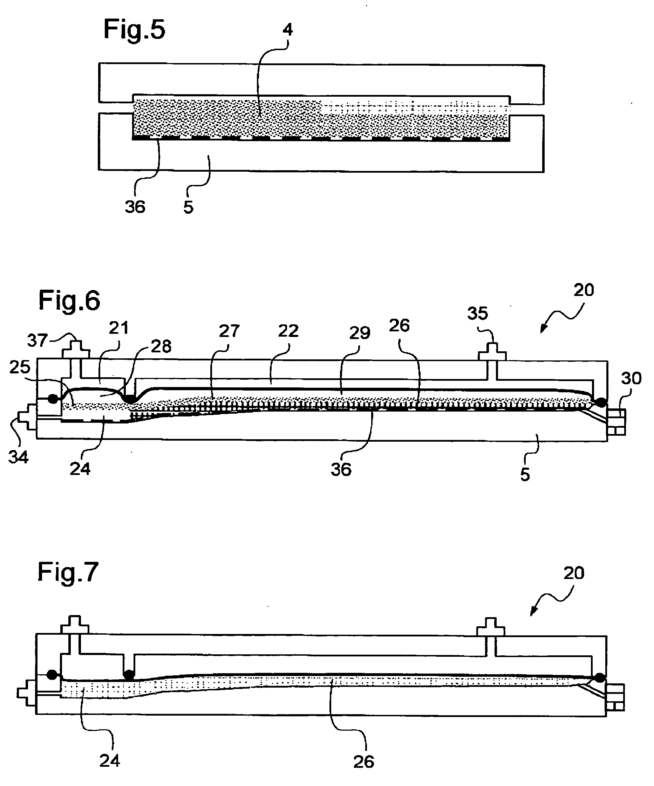

By increasing the pressure in the upper second left hand vacuum chamber 21 and the second right hand vacuum chamber 22 to a higher and different dedicated pressure level depending on the material being used and heating up the resin 25, 27 to decrease its viscosity, the preform 4 gets impregnated (see Fig. 5). Since the first left hand vacuum chamber 28 and the first right hand vacuum chamber 29 with the preform 4 are evacuated before pressure is applied to the resin 25, 27 by reducing the vacuum level in the upper second left hand vacuum chamber 21 and the second right hand vacuum chamber 22, there should be no void formation during infiltration.

According to Fig. 5 a resin rich area of the preform prepreg 4 in the first right hand vacuum chamber 29 is created. In a subsequent curing process a dry preform is placed on top of said resin enriched area of the preimpregnated preform. Due to the applied pressure in a hot press or other curing devices, with vacuum or in an autoclave and heat during the curing process the excessive resin penetrates into the dry preform and impregnates this area. This eases to integrate smaller preforms, which have not to be infiltrated in a separate impregnation step, leading to a reduction of preparation time.

The thermoplastic film 36 acts as a barrier film for easier removal of the preformprepreg 4 from the stiff bottom plate 5. The thermoplastic film 36 comprises additives to improve scratch resistance, to make the preformprepreg 4 conductive acting as a lightening strike protection, to improve the toughness or fulfil the fire smoke toxicity requirements. By using a thermoplastic film the preformprepreg 4 could also be welded to any other thermoplastic part (not shown). The surface quality of the preformprepreg 4 is improved with the film since fibre print through is reduced and the preformprepreg 4 is also easy to paint. With additives for enhancing the conductivity the thermoplastic foil can also act as de-icing device by electrical heating or lightening strike protection.

Manufacturing of a PreformPrepreg 4 with different fibre volume content for a rotorblade:
According to Fig. 6 and 7 the method as described with reference to Fig. 3-5 is used for manufacturing of a preformprepreg 24, 26 with different fibre volume content for a lower intermediate preform of a rotorblade of a helicopter. Corresponding features are referred to with the references of the preceding figures. In the unidirectional area of the first left hand vacuum chamber 28 a higher fibre volume is provided than in the first right hand vacuum chamber 29 (see Fig. 6). Subsequently the compaction level in the first left hand vacuum chamber 28 is increased by means of a supplemental vacuum port 37 according to the compaction needed. The first right hand vacuum chamber 29 is compacted according to its isotropic lay-up 26. By heating the mould 20 the resin viscosity is getting lower leading to an impregnation of the dry preforms 24, 26 in thickness direction. The resin 25, 27 is then cooled down and gets more viscous again resulting in impregnated preforms 24, 26 which are not fully cured and have a tack.

The process is repeated for an upper half of the rotorblade or for sections of the rotorblade or components, which then are assembled into a mould in a press.

## Claims

1. A method of manufacturing at least one multi-layer preimpregnated preform (4, 24, 26), **characterized by** the steps of:
a. Arranging a plurality of preforms (4, 24, 26) of dry semi-finished products or dry fabrics
b. Applying resin (3, 25, 27) locally on the at least one preform (4, 24, 26) of dry semi-finished products or dry fabrics with quantities depending on the local thickness of the at least one preform (4, 24, 26) of dry semi-finished products or dry fabrics in at least one liquid tight rigid first vacuum chamber (9, 28, 29) or applying resin (3, 25, 27) locally on at least one preform (4, 24, 26) with quantities depending on the local thickness of the preform (4, 24, 26) of dry semi-finished products or dry fabrics outside the at least one liquid tight rigid first vacuum chamber (9, 28, 29) and putting the at least one preform (4, 24, 26) applied with resin (3, 25, 27) in the at least one liquid tight rigid first vacuum chamber (9, 28, 29) before closing said at least one first vacuum chamber (9, 28, 29),
c. Tightening the at least one first liquid tight rigid vacuum chamber (9, 28, 29),
d. Removing at first air from at least one second rigid vacuum chamber (13, 21, 22) interacting with the first liquid tight rigid vacuum chamber (9, 28, 29) via a vacuum foil/flexible membrane (8),
e. Removing subsequently air from the at least one first liquid tight rigid vacuum chamber (9, 28, 29) to the same pressure as in the at least one second vacuum chamber (13, 21, 22) or slightly above in order to remove any air from the at least one preform (4, 24, 26) of dry semi-finished products or dry fabrics,
f. Increasing the pressure in the at least one second vacuum chamber (13, 21, 22) to press the resin (3, 25, 27) into the at least one preform (4, 24, 26) in the at least one first liquid tight rigid vacuum chamber (9, 28, 29); and
g. Demoulding the at least one multi-layer preimpregnated preform (4, 24, 26) from the first liquid tight rigid vacuum chamber (9, 28, 29);
wherein a first vacuum port (30) is provided with a valve (31) to control pressure in the first left hand vacuum chamber (28) and in the first right hand vacuum chamber (29);
wherein the vacuum foil (8) is fixed and tightened laterally into each of the left hand lateral wall (6) and the right hand lateral wall (7) to define with the upper rigid plate (12) and the intermediate wall (23) the second left hand vacuum chamber (21) and the second right hand vacuum chamber (22) of the device (20); and
wherein each of the second left hand vacuum chamber (21) and of the second right hand vacuum chamber (22) are provided with respective second vacuum ports (32, 33) controlled by respective valves (34, 35) to define individually the pressure in the second left hand vacuum chamber (21) and in the second right hand vacuum chamber (22) separately from the pressure in the two first liquid tight rigid vacuum chambers (28, 29).

2. The method according to claim 1, **characterized by** automatically adjusting the differential pressure Δp between the second left hand vacuum chamber (13, 21, 22) and the first left liquid tight rigid hand vacuum chamber (9, 28, 29).

3. The method according to claim 1, **characterized by** using a slightly raised differential pressure Δp.

4. The method according to claim 1, **characterized by** draping the still tacky but already impregnated preforms (4, 24, 26).

5. The method according to claim 1, **characterized by** producing rotor blades, particularly rotor blades of helicopters or blades for wind energy plants, with several preforms (4, 24, 26) shaped as halves or several preforms (4, 24, 26) being impregnated separately.

6. The method according to claim 1, **characterized by** adding foam or lead or other non fibrous materials to a tacky surface of the at least one preform (4, 24, 26) after impregnation of the at least one preform (4, 24, 26) and integrating said foam or lead or non fibrous materials in the component formed of the at least one preform (4, 24, 26) and curing the component in a press or other curing device to harden the resin (3, 25, 27) of the component completely.

7. The method according to claim 1, **characterized by** impregnating the at least one preforms (4, 24, 26) for structural components of aircrafts or components in the automotive or marine industry, like frames, longitudinal beams and/or reinforced outer shells by impregnating the at least one entire preform (4, 24, 26) or subpreforms as individual components, joining said components in the impregnated stage or joining said at least one preforms (4, 24, 26) to a component when curing, e.g. for outer shells or stringers.

## Patentansprüche

1. Verfahren zur Herstellung mindestens einer mehrschichtigen vorimprägnierten Vorform (4, 24, 26), **gekennzeichnet durch** folgende Schritte:
a. Anordnen einer Mehrzahl von Vorformen (4, 24, 26) aus trockenen halbfertigen Produkten oder trockenen Geweben,
b. lokales Aufbringen von Harz (3, 25, 27) auf mindestens eine Vorform (4, 24, 26) aus trockenen halbfertigen Produkten oder trockenen Geweben in Mengen, die von der lokalen Dicke der mindestens einen Vorform (4, 24, 26) aus trockenen halbfertigen Produkten oder trockenen Geweben abhängen, in mindestens einer flüssigkeitsdichten, steifen ersten Vakuumkammer (9, 28, 29), oder lokales Aufbringen von Harz (3, 25, 27) auf mindestens eine Vorform (4, 24, 26) in Mengen, die von der lokalen Dicke der Vorform (4, 24, 26) der trockenen halbfertigen Produkte oder der trockenen Gewebe abhängen außerhalb der mindestens einen flüssigkeitsdichten, steifen ersten Vakuumkammer (9, 28, 29), und Einbringen der mindestens einen Vorform (4, 24, 26) mit aufgebrachtem Harz (3, 25, 27) in die mindestens eine flüssigkeitsdichte, steife erste Vakuumkammer (9, 28, 29), bevor diese mindestens eine erste Vakuumkammer (9, 28, 29) geschlossen wird,
c. Abdichten der mindestens einen ersten flüssigkeitsdichten, steifen Vakuumkammer (9, 28, 29),
d. zuerst Entfernen von Luft aus mindestens einer zweiten steifen Vakuumkammer (13, 21, 22), die mit der ersten flüssigkeitsdichten, steifen Vakuumkammer (9, 28, 29) über eine Vakuum-folie/flexible Membran (8) zusammenwirkt,
e. anschließendes Entfernen von Luft aus der mindestens einen ersten flüssigkeitsdichten, steifen Vakuumkammer (9, 28, 29), bis diese Kammer den gleichen Druck aufweist, wie die mindestens eine zweite Vakuumkammer (13, 21, 22) oder einen etwas höheren Druck, um alle Luft aus der mindestens einen Vorform (4, 24, 26) aus trockenen halbfertigen Produkten oder trockenen Geweben zu entfernen,
f. Erhöhen des Drucks in der mindestens einen zweiten Vakuumkammer (13, 21, 22), um das Harz (3, 25, 27) in die mindestens eine Vorform (4, 24, 26) in der mindestens einen ersten flüssigkeitsdichten, steifen Vakuumkammer (9, 28, 29) zu pressen, und
g. Entformen der mindestens einen mehrschichtigen vorimprägnierten Vorform (4, 24, 26) aus der ersten flüssigkeitsdichten, steifen Vakuumkammer (9, 28, 29),
wobei ein erster Vakuumstutzen (30) mit einem Ventil (31) versehen ist, um den Druck in der ersten linken Vakuumkammer (28) und in der ersten rechten Vakuumkammer (29) zu steuern,
wobei die Vakuumfolie (8) in jeder der linken Seitenwand (6) und der rechten Seitenwand (7) befestigt und strammgezogen ist, um mit der oberen steifen Platte (12) und der Zwischenwand (23) die zweite linke Vakuumkammer (21) und die zweite rechte Vakuumkammer (22) der Vorrichtung (20) zu definieren, und
wobei jede der zweiten linken Vakuumkammer (21) und der zweiten rechten Vakuumkammer (22) mit jeweiligen zweiten Vakuumstutzen (32, 33) versehen ist, die über jeweilige Ventile (34, 35) gesteuert werden, um einzeln den Druck in der zweiten linken Vakuumkammer (21) und der zweiten rechten Vakuumkammer (22) getrennt von dem Druck in den zwei ersten flüssigkeitsdichten, steifen Vakuumkammern (28, 29) zu definieren.

2. Verfahren nach Anspruch 1,
**gekennzeichnet durch** ein automatisches Einstellen des Differenzdrucks Δp zwischen der zweiten linken Vakuumkammer (13, 21, 22) und der ersten linken flüssigkeitsdichten, steifen Vakuumkammer (9, 28, 29).

3. Verfahren nach Anspruch 1,
**gekennzeichnet durch** Anwenden eines leicht erhöhten Differenzdrucks Δp.

4. Verfahren nach Anspruch 1,
**gekennzeichnet durch** Abdecken der noch klebrigen, jedoch schon imprägnierten Vorformen (4, 24, 26).

5. Verfahren nach Anspruch 1,
**gekennzeichnet durch** Herstellen von Rotorblättern, insbesondere von Rotorblättern für Hubschrauber oder Blätter für Windkraftanlagen, mit mehreren Vorformen (4, 24, 26), die als Hälften oder als mehrere Vorformen (4, 24, 26), die getrennt voneinander imprägniert wurden, geformt sind.

6. Verfahren nach Anspruch 1,
**gekennzeichnet durch** Hinzufügen von Schaum oder Graphit oder anderen nichtfaserigen Materialien zu einer klebrigen Oberfläche der mindestens einen Vorform (4, 24, 26) nach dem Imprägnieren der mindestens einen Vorform (4, 24, 26) und Integrieren des Schaums oder Graphits oder nichtfaseriger Materialien in das aus der mindestens einen Vorform (4, 24, 26) geformte Bauteil, und Aushärten des Bauteils in einer Presse oder in einer anderen Aushärtvorrichtung, um das Harz (3, 25, 27) des Bauteils vollstandig auszuhärten.

7. Verfahren nach Anspruch 1,
**gekennzeichnet durch** Imprägnieren der mindestens einen Vorform (4, 24, 26) für Strukturbauteile von Flugzeugen oder für Komponenten in der Automobil- oder Schifffahrtsindustrie, wie Rahmen, Längsträger und/oder verstärkten Außenhüllen, **durch** Imprägnieren der gesamten mindestens einen Vorform (4, 24, 26) oder der Untervorformen als Einzelbauteile, Verbinden dieser Bauteile in dem imprägnierten Stadium oder Verbinden der mindestens einen Vorform (4, 24, 26) mit einem Bauteil beim Aushärten, z.B. für äußere Hüllen oder Längsspanten.

## Revendications

1. Procédé de fabrication d'au moins une préforme pré-imprégnée multicouches (4, 24, 26), **caractérisé par** les étapes consistant à :
a. agencer une pluralité de préformes (4, 24, 26) de produits semi-finis secs ou d'étoffes sèches ;
b. appliquer de la résine (3, 25, 27) localement sur la au moins une préforme (4, 24, 26) de produits semi-finis secs ou d'étoffes sèches, les quantités étant fonction de l'épaisseur locale de la au moins une préforme (4, 24, 26) de produits semi-finis secs ou d'étoffes sèches dans au moins une première chambre à vide (9, 28, 29) rigide, étanche aux liquides ou à appliquer de la résine (3, 25, 27) localement sur au moins une préforme (4, 24, 26), les quantités étant fonction de l'épaisseur locale de la préforme (4, 24, 26) de produits semi-finis secs ou d'étoffes sèches à l'extérieur de la au moins une première chambre à vide (9, 28, 29) rigide, étanche aux liquides et à mettre la au moins une préforme (4, 24, 26), sur laquelle de la résine (3, 25, 27) a été appliquée, dans la au moins une première chambre à vide (9, 28, 29) rigide, étanche aux liquides, avant de fermer ladite au moins une première chambre à vide (9, 28, 29) ;
c. tendre la au moins une première chambre à vide (9, 28, 29) rigide, étanche aux liquides ;
d. éliminer d'abord l'air d'au moins une seconde chambre à vide (13, 21, 22) rigide, interagissant avec la première chambre à vide (9, 28, 29) rigide, étanche aux liquides, par l'intermédiaire d'un film sous vide / d'une membrane souple (8) ;
e. éliminer ensuite l'air de la au moins une première chambre à vide (9, 28, 29) rigide, étanche aux liquides, à une pression identique à celle dans la au moins une seconde chambre à vide (13, 21, 22) ou légèrement supérieure, afin d'éliminer tout air de la au moins une préforme (4, 24, 26) de produits semi-finis secs ou d'étoffes sèches ;
f. augmenter la pression dans la au moins une seconde chambre à vide (13, 21, 22), pour presser la résine (3, 25, 27) dans la au moins une préforme (4, 24, 26) dans la au moins une première chambre à vide (9, 28, 29) rigide, étanche aux liquides et
g. démouler la au moins une préforme pré-imprégnée multicouches (4, 24, 26) de la première chambre à vide (9, 28, 29) rigide, étanche aux liquides ;
dans lequel un premier orifice à vide (30) est muni d'une soupape (31) pour commander la pression dans la première chambre à vide gauche (28) et dans la première chambre à vide droite (29) ;
dans lequel le film sous vide (8) est fixé et tendu latéralement dans chacune des parois parmi la paroi latérale gauche (6) et la paroi latérale droite (7), pour définir, avec la plaque rigide supérieure (12) et la paroi intermédiaire (23) la seconde chambre à vide gauche (21) et la seconde chambre à vide droite (22) du dispositif (20) et
dans lequel chacune des chambres parmi la seconde chambre à vide gauche (21) et la seconde chambre à vide droite (22) est munie de seconds orifices à vide (32, 33) respectifs, commandés par les soupapes (34, 35) respectives, pour définir individuellement la pression dans la seconde chambre à vide gauche (21) et dans la seconde chambre à vide droite (22), séparément de la pression dans les deux premières chambres à vide (28, 29) rigides, étanches aux liquides.

2. Procédé selon la revendication 1, **caractérisé par** l'opération consistant à ajuster automatiquement la pression différentielle Δp entre la seconde chambre à vide gauche (13, 21, 22) et la première chambre à vide (9, 28, 29) gauche rigide, étanche aux liquides.

3. Procédé selon la revendication 1, **caractérisé par** l'opération consistant à utiliser une pression différentielle Δp légèrement accrue.

4. Procédé selon la revendication 1, **caractérisé par** l'opération consistant à draper les préformes (4, 24, 26) encore collantes mais déjà imprégnées.

5. Procédé selon la revendication 1, **caractérisé par** l'opération consistant à fabriquer des pales de rotor, en particulier des pales de rotor d'hélicoptères ou des pales pour des centrales à énergie éolienne, avec plusieurs préformes (4, 24, 26) formées comme des moitiés ou plusieurs préformes (4, 24, 26) imprégnées séparément.

6. Procédé selon la revendication 1, **caractérisé par** l'opération consistant à ajouter de la mousse ou du plomb ou d'autres matériaux non fibreux sur une surface collante de la au moins une préforme (4, 24, 26) après imprégnation de la au moins une préforme (4, 24, 26) et à intégrer ladite mousse ou ledit plomb ou les matériaux non fibreux dans le composant formé de la au moins une préforme (4, 24, 26) et à faire cuire le composant dans une presse ou autre dispositif de cuisson, pour faire durcir la résine (3, 25, 27) du composant complètement.

7. Procédé selon la revendication 1, **caractérisé par** l'opération consistant à imprégner les au moins une préformes (4, 24, 26) des composants structurels d'aéronefs ou de composants dans l'automobile ou la marine, tels que des cadres, des longerons longitudinaux et / ou des coques extérieures renforcées, en imprégnant la au moins une préforme entière (4, 24, 26) ou des sous-préformes à titre de composants individuels, à assembler lesdits composants au stade imprégné ou à assembler lesdites au moins une préformes (4, 24, 26) en un composant lors de la cuisson, par ex. pour obtenir des coques extérieures ou des lisses.
